# EUROPEAN PATENT SPECIFICATION

(11) **EP 1 742 546 B1**
(45) Date of publication and mention of the grant of the patent: **13.02.2008**
(21) Application number: 05778233.6
(22) Date of filing: 14.04.2005
(51) Int. Cl.: A24B 15/00

(54) **REMOVAL OF NITROGEN CONTAINING COMPOUNDS FROM TOBACCO**
ENTFERNEN VON STICKSTOFF-ENTHALTENDEN VERBINDUNGEN AUS TABAK
ELIMINATION DE COMPOSES AZOTES DU TABAC

(30) Priority: 29.04.2004 US 835379
(43) Date of publication of application: 17.01.2007
(60) Divisional application: 07012802.0
(73) Proprietor: Brown & Williamson Holdings, Inc., Wilmington, DE 19803 (US)
(72) Inventor: MUA, John-Paul, Advance,North Carolina 27006 (US); HAYES, Brad, L., Dublin, GA 31021 (US)
(74) Representative: Tanner, James Percival
(86) International application number: PCT/US2005/012679
(87) International publication number: WO 2005/112669

(56) References cited:
- EP-A- 0 477 538
- EP-A- 0 823 206
- EP-A- 0 862 865
- WO-A-02/03817
- DE-U1- 9 413 689
- US-A- 4 765 908
- US-A- 5 601 097
- US-A1- 2002 134 394
- US-A1- 2004 045 565
- PATENT ABSTRACTS OF JAPAN vol. 008, no. 172 (C-237), 9 August 1984 (1984-08-09) & JP 59 069146 A (NAKAJIMA KAGAKU SANGYO KK), 19 April 1984 (1984-04-19)
- PATENT ABSTRACTS OF JAPAN vol. 009, no. 096 (C-278), 25 April 1985 (1985-04-25) & JP 59 227701 A (NIHON DENSHI ZAIRIYOU KK; others: 01), 21 December 1984 (1984-12-21)

## Description

### CROSS-REFERENCE TO RELATED APPLICATIONS

This international patent application claims priority to and benefit of, currently pending, U.S. Patent Application Serial Number 10/835,379, filed on 29 April 2004.

### STATEMENT REGARDING FEDERALLY SPONSORED RESEARCH OR DEVELOPMENT

Not applicable.

### FIELD OF INVENTION

The present invention relates to a process for removal of nitrogen containing compounds from tobacco with minimum removal of desired compounds such as alkaloids, phosphates and other compounds that contribute to the flavor of the smoking article or decrease formation of undesired compounds in the smoke.

Selectivity in tobacco component removal is vital for production of cigarettes with good smoke quality. The present invention involved selective component removal from tobacco by extracting components from tobacco by liquid extraction and treating the tobacco extract with adsorbents and then adding back the treated extract to the tobacco. The tobacco may be in the form of washed lamina, fiber, or fiber formed sheets. The adsorbents can be in the form of organic or inorganic solids such as for example *β*-cyclodextrin, cellulose acetate, and combinations of bentonite and activated carbon.

A process for reducing nitrogen containing compounds in tobacco by contacting an aqueous tobacco extract with bentonite as adsorbent material is described in US 2004/045565, WO 0203817, EP 0862865 and US 5601097, whereas US 2004/045565 and US 2002/134394 describe the use of activated carbon as adsorbent material.

One object of the present invention relates to a process for removing Hoffmann analyte smoke precursors from a tobacco extract. Another object of the present invention is directed to a process for removing nitrogen containing compounds from tobacco with minimum removal of desired compounds such as alkaloids that contribute to the flavour of the tobacco and phosphates which have been found to decrease smoke formaldehyde formation. Additionally, proteins are precursors to smoke aromatic and heterocyclic amines and hence are nitrogen containing compounds that are targeted for removal in the present invention.

According to the present invention there is provided a process for selectively removing nitrogen containing compounds from tobacco, comprising the steps of:
mixing a tobacco containing material with an aqueous solvent to form an extract and a tobacco residue;
separating said tobacco residue from said extract;
contacting said extract with an adsorbent material, wherein said adsorbent comprises a mixture of a bentonite and activated carbon material; and
introducing said extract to a tobacco containing material.

The mixing of the tobacco containing material with an aqueous solvent may be at 60° to 90° for 15 to 30 minutes.

The mixing of the tobacco containing material with an aqueous solvent may be carried out with about one part of tobacco to eleven to fifteen parts of water.

The separating of the tobacco residue from the extract may be accomplished by centrifuge or by filtration.

The contacting an extract with an adsorbent material may be carried out by passing the extract through a packed column having the adsorbent.

The contacting an extract with an adsorbent material may be accomplished by recirculating the extract with the adsorbent.

The extract may be separated from the adsorbent material by centrifuge or filtration.

The adsorbent material may consist essentially of a mixture of bentonite and activated carbon, and the adsorbent may have about one part, two parts, three parts of four parts of activated carbon for one part of bentonite or the adsorbent may have about two parts of bentonite for one part of activated carbon.

The adsorbent material may cellulose acetate.

The adsorbent material may contain *β*-cyclodextrin.

The process of the invention may include a step of concentrating the extract forming a concentrated extract, wherein the concentrating step follows the step of separating the tobacco containing material from the extract.

The tobacco containing material to which the extract is introduced may be the tobacco residue.

The process of the present invention generally involves mixing tobacco fines, stems, scraps, cut lamina, shredded stems, or any combination thereof with an aqueous solvent under conditions favouring the extracting of nitrogen containing compounds. The aqueous solvent extract and the tobacco materials are then mechanically separated by centrifugation or by filtration. The tobacco solids or fiber may be left as cut lamina; refined and made into sheets by a paper making process; or refined and digested then mixed with a binder and cast sheet for band cast sheet processing. In each of the embodied processes for treating the solids, an extract or concentrated extract resulting from a process for treating the aqueous solvent extract is added back to the solids.

The aqueous solvent extract is either passed through an adsorbent packed column or mixed with an adsorbent and mechanically separated by filtration or by centrifugation. The extract is then either mixed with the tobacco solids and cast as sheet via a band cast process or concentrated. The concentrated extract may be added back to the tobacco solids or it may be added back to the tobacco solids after they have been cast into sheets via a paper making process.

The primary objective of the present invention is to reduce the content of nitrogen containing compounds (i.e. proteins, TSNAs), polyphenols (Chlorogenic acid, Ruten, Scopoletin), nitrates and chlorides in the tobacco, while retaining desired constituents that contribute to the flavor (i.e. alkaloids, fructose and glucose) of the tobacco or reduce undesired constituents in the smoke (i.e. phosphates reduce formaldehyde concentration in the smoke).

### DESCRIPTION OF DRAWING

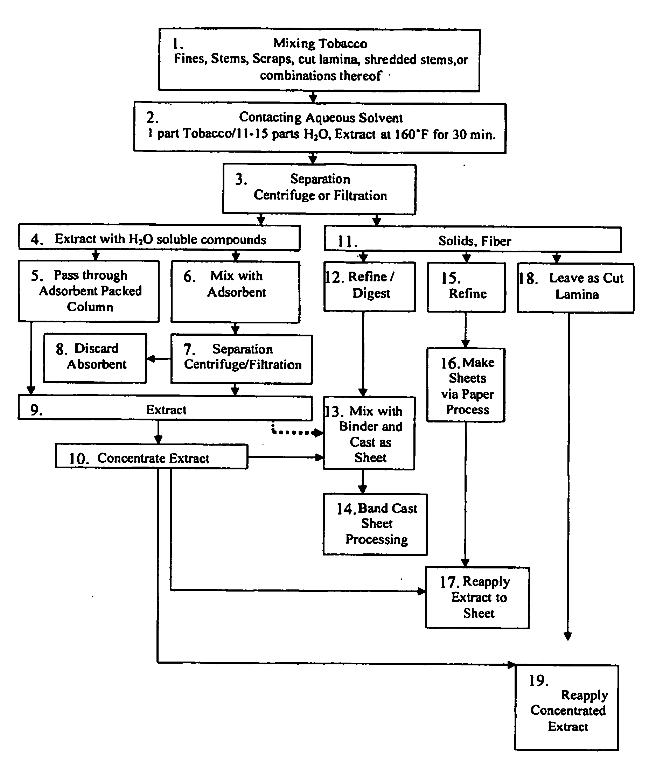

The drawing attached hereto is a flow diagram of a process for treating tobacco in accordance with a preferred embodiment of the present invention.

### DETAILED DESCRIPTION OF THE PREFERRED EMBODIMENTS

The process is best described with reference to the drawing. The first step of the process involves mixing (step 1) tobacco fines, stems, scraps, cut lamina, shredded stems, or any combination thereof. The mixed tobacco solids resulting from step 1 are then contacted at step 2 with an aqueous solvent under conditions favoring the selective extraction of nitrogen containing compounds. It has been determined that such conditions include adding one part of tobacco with about eleven to fifteen parts of water and extracting at a temperature of about 71,1°C (160°F) for about 30 minutes. The aqueous solvent extract or weak extract liquor (WEL) formed in step 2 and the solid tobacco materials of step 1 are then mechanically separated at step 3 by either filtration or centrifugation.

The WEL, as indicated at step 4, is either passed through an adsorbent packed column (step 5) or mixed with an adsorbent (step 6) and separated, as indicated at step 7, from the adsorbent. The separation or dewatering at step 7 may be accomplished by filtration, by basket centrifuge, or by stacked disc centrifuge. The adsorbent resulting from step 7 is then discarded, as indicated at step 8. Whether the extract with the water soluble compounds at step 4 is passed through a packed column (step 5) or mixed with an adsorbent (step 6), an extract with reduced nitrogen containing compounds (step 9) is yielded. The extract with reduced nitrogen containing compounds (step 9) is then either mixed (step 13) with the tobacco solids and cast as sheet (step 14) via a band cast process or concentrated (step 10). Concentration (step 10) is accomplished by placing extract from step 9 under a vacuum to evaporate the aqueous solvent and yield a concentrated extract having about 30% to 35% solids. The concentrated extract from step 10 may be applied directly to the tobacco solids at step 19 or it may be applied to the tobacco solids after they have been cast into sheets at step 17 via a paper making process.

The tobacco solids (step 11) or fiber may be left as cut lamina (step 18); refined (step 15) and made into sheets by a paper making process (step 16); or refined and digested (step 12). Digestion at step 12 may be accomplished by digesting with an alkali (up to 12% dwb) at 90° C to 121° C, up to 30 psig for 15 to 120 minutes. The refined and digested solids resulting from step 12 are then mixed at step 13 with a binder and extract from step 9 or concentrated extract from step 10 and cast as sheet from step 14 via band cast sheet processing.

The refined tobacco solids resulting from step 15 are made into sheets via a paper making process (step 16), after which the concentrated extract resulting from step 10 is added back to the tobacco material that is now in the form of a sheet (step 17). Additionally, the tobacco solids from step 11 may be left as cut lamina at step 18 and the concentrated extract resulting from step 10 may be reapplied directly at step 19.

A vital aspect of the present invention is the adsorbent material used in packed column in step 5 or the mixing step 6. It has been determined that mixtures of bentonite clay and activated carbon, l3-cyclodextrin, and cellulose acetate produce the desired effect of selectively removing Hoffmann anlaytes from the WEL (step 4) without removing the desired compounds such as alkaloids and phosphates. Cyclodextrins are starched derived cyclic maltooligosaccharides, known to form inclusion complexes with several compounds. Due to the latter property and low water solubility characteristics, cyclodextrins are used to encapsulate flavors, de-bitter fruit juices, and separate cholesterol from egg yolk.

### EXAMPLES 1-4

Experiments were undertaken to evaluate the effectiveness of adsorbents against an untreated control, bentonite and activated carbon. Two different methods of contacting the WEL with the adsorbents were evaluated, packed column technology (PC) and re-circulation (Re). The objective of these experiments was to evaluate adsorbents against bentonite and activated carbon for selective Hoffmann analyte removal (i.e. soluble proteins, TSNAs, polyphenols, chlorides, and nitrate) and the retention of selected desired components (i.e. alkaloids, phosphates, and sugars) in weak extract liquor. It has been determined that increased phosphate levels in tobacco blends decrease smoke formaldehyde formation. Proteins are precursors to smoke aromatic and heterocyclic amines. Therefore the percentage of removal of TSNAs, protein, and polyphenols (chlorogenic acid, ruten, and scopoletin) is reported and the percentage of retention of alkaloids and phosphates is reported.

The adsorbents tested were cellulose acetate, β-cyclodextrin, and several combinations of bentonite and activated carbon. Since it is often difficult to achieve complete mechanical separation of the selected adsorbents from the WEL after mixing with the adsorbents, both packed column and re-circulation processes were tested. The following examples depict the results of analyses run on the WEL after contacting the adsorbents of the present invention as well as several control samples.

### Example 1 (comparative):

### Preparation of weak Extract Liquor:

WEL was prepared by first mixing a blend of flue-cured and burley scrap in a ratio of about 1 to 1. This tobacco blend was then extracted once with water for 15 to 30 minutes at 60° C to 90° C. The tobacco solids were then dewatered by centrifugation. The liquids or WEL side was retained while the tobacco solids side was discarded.

### Packed Column Preparation (PC):

Laboratory size glass columns were separately hand packed with 25g to 50g of cellulose acetate, activated carbon and β-cyclodextrin. Approximately 600 ml of the WEL was then passed through each column at an elution rate of about 20 ml per minute. The eluted extracts were subsequently submitted for analysis.

**Table I: Burley weak extract treatment with adsorbents in a Packed Column**

| Sample Description/Absorbent | Soluble Protein mg/ml (% rem.) | Nitrate mg/ml (% rem.) | Chloride mg/ml (%rem.) | TSNAs ppm (% rem.) | Polyphenols mg/ml (% rem.) | | | Alkaloid mg/ml (% ret.) | Phosphates mg/ml (% ret.) |
|---|---|---|---|---|---|---|---|---|---|
| | | | | | Chlorogenic acid | Ruten | Scopoletin | | |
| | | | | | | | | | |
| Untreated | .47 | 99.49 | 570.05 | .528 | .034 | .027 | >.005 | 1175.7 | 215.22 |
| | | | | | | | | | |
| Cellulose | .29 | 532.42 | 410.72 | .089 | 0.00(100) | 0.00 | 0.00 | 373.49 | 0.00 |
| Acetate | (38) | (47) | (28) | (83) | | (100) | (100) | (32) | (0) |
| | | | | | | | | | |
| Activated | .26 | 612.76 | 418.50 | .007 | 0.00(100) | 0.00 | 0.00 | 0.00(0) | 126.74 |
| Carbon | (45) | (39) | (27) | (99) | | (100) | (100) | | (59) |
| | | | | | | | | | |
| β- | .17 | 620.76 | 319.17 | .212 | 0.00(100) | 0.00 | >.005 | 663.64 | 126.3 |
| cyclodextrin | (64) | (38) | (44) | (60) | | (100) | ADL* | (57) | (59) |

| | | | | | | | | | |
|---|---|---|---|---|---|---|---|---|---|
| * Above detection limit | | | | | | | | | |

β-cyclodextrin was found to be the most effective adsorbent in removing soluble proteins from the WEL by removing 64%. Additionally, β-cyclodextrin removed 60% of the TSNAs from the WEL while the WEL retained 57% of the alkaloids and 59% of die phosphates Cellulose acetate was also found to be effective by removing 38% of the soluble proteins and 83% of the TSNAs while retaining 32% of the alkaloids. The activated carbon was found not to be selective in the removal of nitrogen containing compounds by removing 100% of the alkaloids.

### Example 2 (Comparative):

### Re-circulation (RC):

Separate samples of approximately 9g of β-cyclodextrin and approximately 9g of bentonite were placed into separate Erlenmeyer flasks. Approximately 300 ml of the WEL prepared in Example 1 was mixed with each 9g sample of an adsorbent. The resulting solutions were stirred in the Erlenmeyer flasks for 15 to 30 minuter at about 32,2°C (90° F). The mixtures were then separately centrifuged. Each extract was then decanted and submitted for analyses. The residues were then discarded. The following table depicts the results of analyses run on the WEL after contacting the adsorbents of the present invention as well as control samples.

**Table II: Burley weak extract treatment with adsorbents via Recirculation**

| Sample Description/Adsorbent | Soluble Protein (mg/ml) (% rem.) | Nitrate mg/ml (%rem.) | Chloride mg/ml (% rem.) | TSNAs ppm (% rem.) | Polyphenols mg/ml (% rem) | | | Alkaloid mg/ml (% ret.) | Phosphates mg/ml (% ret.) |
|---|---|---|---|---|---|---|---|---|---|
| | | | | | Chlorogenic acid | Ruten | Scopoletins | | |
| | | | | | | | | | |
| Untreated | .55 | 1250.07 | 644.91 | .471 | 342 | .025 | >.005 | 1414.26 | 207.07 |
| | | | | | | | | | |
| β- | .41 | 1190.08 | 605.62 | .408 | .040(18) | .032 | >.005 | 1325.07 | 186.60 |
| cyclodextrin | (25) | (5) | (6) | (13) | | (-24) | (ADL) | (94) | (90) |
| | | | | | | | | | |
| Bentonite | .19 | 131102 | 781.96 | .388 | 0.00(100) | 0.00 | >.005 | 461.97 | 0.00(0) |
| | (83) | (-4) | (-21) | (18) | | (100) | (ADL) | (33) | |

β-cyclodextrin was found to be effective in the recirculation process as well. β-cyclodextrin removed 25% of the proteins from the WEL while the WEL retained 94% of the alkaloids and 90% of the phosphates. Bentonite was found not to be as selective in removal since the WEL only retained 33% of the alkaloids and none of the phosphates.

### Example 3:

Separate samples of bentonite, activated carbon, and a mixture comprising about 1 part of bentonite for each part of activated were placed into separate Erlenmeyer flasks. WEL, as prepared in example 1, was added (1 L aliquots) to the Erlenmeyer flasks containing the activated carbon and bentonite samples to obtain a .8% solution. WEL was added to the Erlenmeyer flask containing the mixture of bentonite and activated carbon to obtain a solution having 1% bentonite and 1% activated carbon. The resulting solutions were then stirred in the Erlenmeyer flasks for 15 to 30 minutes at about 32,2°C (90°F).The mixtures were then separately centrifuged. Each extract was then decanted and submitted for analyses. The residues were then discarded. The following table depicts the results of analyses run on the WEL after contacting the adsorbents of the present invention as well as control samples.

**Table III: Burley weak extract treatment with adsorbents via Recirculation**

| Sample Description | Soluble Protein mg/ml (% rem.) | TSNAs ppm (% rem.) | Polyphenols mg/ml (% rem.) | | | Alkaloid mg/ml (% ret.) | Nitrate mg/ml (% ret.) |
|---|---|---|---|---|---|---|---|
| | | | Chlorogenic acid | Ruten | Scopoletin | | |
| | | | | | | | |
| Untreated | 284 | .79 | .156 | .2 | .04 | .6 | .55 |
| | | | | | | | |
| Bentonite (.8%) | 105 | .42 | 0 | .17 | .02 | .63 | .59 |
| | (63) | (46.8) | (100) | (15) | (100) | (-5.0) | (-7.3) |
| | | | | | | | |
| Activated Carbon | 120 | .06 | 0 | 0 | 0 | .06 | .58 |
| (AC, .8%, pellets) | (57.7) | (92.4) | (100) | (100) | (100) | (10) | (-5.5) |
| | | | | | | | |
| Bentonite / AC | 43 | .15 | 0 | 0 | 0 | .32 | .57 |
| (1%/1%) | (85) | (81) | (100) | (100) | (100) | (53.3) | (-3.6) |

The bentonite and activated carbon (1:1) adsorbent was found to be more effective in selectively removing the soluble proteins, TSNAs, chlorogenic acid, ruten, and scopoletin without removing a substantial amount of alkaloids. The separate bentonite and activated carbon adsorbents were found not to be selective in the removal of nitrogen containing compounds since they adsorbed almost all of the alkaloids.

### Example 4:

A variety of combinations of bentonite and activated carbon were tested in relation to varying amounts of separate samples of bentonite and activated carbon. These tests were performed on two WELs prepared as in example 1, one prepared from burley and the other prepared from flue cured tobacco. The WELs were tested with the adsorbents using the recirculation process in example 2.

**Table IV: Burley or Flue weak extract treatment with adsorbents via Recirculation**

| Sample Description / Adsorbent^{c} | TSNAs^{a} ppm (% rem.) | Soluble Protein mg/ml (% rem.) | Polyphenols mg/ml (% rem.) | | | Alkaloid mg/ml (% ret.) |
|---|---|---|---|---|---|---|
| | | | Chlorogenic acid | Ruten | Scopoletin | |
| | | | | | | |
| Untreated Burley | .92 | 289 | .18 | 0.25 | 0.04 | .75 |
| | | | | | | |
| Bent. (.5%) | .56 (39) | 139 (52) | .10 (44) | 0.11 (56) | 0.01 (75) | .77 (0) |
| | | | | | | |
| Bent. (1%) | .51 (45) | 101 (65) | 0.01 (94) | 0.02 (92) | 0.01 (75) | .71 (95) |
| | | | | | | |
| Bent. (2%) | .54 (41) | 79 (83) | 0.00 (100) | 0.00 (100) | 0.01 (75) | .69 (92) |
| | | | | | | |
| AC (.4%)^{b} | .11 (88) | 170 (41) | 0.00 (100) | 0.00 (100) | 0.00 (100) | .47 (63) |
| | | | | | | |
| AC (.8%)^{b} | .05 (95) | 160 (45) | 0.00 (100) | 0.00 (100) | 0.00 (100) | .39 (52) |
| | | | | | | |
| AC (1%)^{b} | .01 (99) | 160 (45) | 0.00 (100) | 0.00 (100) | 0.00 (100) | .33 (44) |
| | | | | | | |
| AC (2%)^{b} | 0.00 (100) | 140 (52) | 0.00 (100) | 0.00 (100) | 0.00 (100) | 0.00 (0) |
| | | | | | | |
| BenL/AC (1: 1) | .09 (90) | 60 (79) | 0.00 (100) | 0.00 (100) | 0.00 (100) | 0.49 (65) |
| | | | | | | |
| Bent./AC (1:2) | .02 (98) | 40 (86) | 0.00 (100) | 0.00 (100) | 0.00 (100) | 0.33 (44) |
| | | | | | | |
| BenL/AC (1:3) | 0.00 (100) | 80 (73) | 0.00 (100) | 0.00 (100) | 0.00 (100) | 0.32 (43) |
| | | | | | | |
| Bent./AC (1:4) | 0.00 (100) | 99 (65) | 0.00 (100) | 0.00 (100) | 0.00 (100) | 0.30 (40) |
| | | | | | | |
| Bent./AC (2:1) | 0.10 (87) | 20 (93) | 0.00 (100) | 0.00 (100) | 0.00 (100) | 0.42 (56) |
| | | | | | | |
| Untreated | 0.52 | 458 | 0.34 | 0.30 | 0.04 | 0.47 |
| Flue-cure | | | | | | |
| | | | | | | |
| Bent./AC | 0.00 | 92 (73) | 0.00 | 0.00 | 0.00 | .31 |
| (1:1) | (100) | | (100) | (100) | (100) | (66) |

| | | | | | | |
|---|---|---|---|---|---|---|
| ^{a} NNK, NNN, NAB, NAT. ^{b} Activated carbon powder (0.4-2.0 parts powder is as effective as 5-8 parts pellets). ^{c} Based on 1.0% (w/v) of adsorbent used. | | | | | | |

The adsorbents of the different combinations of bentonite and activated carbon were more effective in removing soluble proteins, TSNAs and polyphenols than the bentonite or activated carbon alone. Additionally, the adsorbents of the different combinations of bentonite and activated carbon were selective in removal of these constituents in that a substantial percentage of the alkaloids remained in the WEL. Additionally, the one to one bentonite and activated carbon adsorbent was found to selectively remove the nitrogen containing compounds without the undesired removal of alkaloids in a WEL made from flue cured tobacco.

## Claims

1. A process for selectively removing nitrogen containing compounds from tobacco, comprising the steps of:
mixing a tobacco containing material with an aqueous solvent to form an extract and a tobacco residue;
separating said tobacco residue from said extract;
contacting said extract with an adsorbent material, wherein said adsorbent comprises a mixture of a bentonite and activated carbon material; and
introducing said extract to a tobacco containing material.

2. The process of Claim 1 wherein said mixing of said tobacco containing material with an aqueous solvent is at 60° to 90° C for 15 to 30 minutes.

3. The process of Claim 1 wherein said mixing of said tobacco containing material with an aqueous solvent is carried out with one part of tobacco to eleven to fifteen parts of water.

4. The process of Claim 1 wherein said separating of said tobacco residue from said extract is accomplished by centrifuge or by filtration.

5. The process of Claim 1 wherein said contacting aa extract with an adsorbent ma is earned out by passing said extract through a packed column having said adsorbent

6. The process of Claim 1 wherein said contacting an extract with an adsorbent material is accomplished by re-eizuulating said extract with said adsorbent.

7. The process of Claim 6 wherein said extract is separated Horn said adsorbent material by centrifuge or filtration.

8. The process of Claim 1 wherein said adsorbent material consists essentially of a mixture of bentonite and activated carbon.

9. The process of Claim 8 wherein said adsorbent has about one part of activated carbon for one part of bentonite.

10. The process of Claim 8 wherein said adsorbent has about two parts of activated carbon for one part of bentonite.

11. The process of Claim 8 wherein said adsorbent has about three parts of activated carbon for one part of bentonite.

12. The of Claim 8 wherein said adsorbent has about four parts four of activated carbon for one part of bentonite.

13. The process of Claim 8 wherein said adsorbent has about two parts of bentonite for one part of activated carbon.

14. The process of Claim 1 wherein said adsorbent material contains cellulose acetate.

15. The process of Claim 1 wherein said adsorbent material contains β-cyclodextrin.

16. The process of Claim 1 wherein said process includes a step of concentrating said extract forming a concentrated extract, wherein said concentrating step follows said step of separating said tobacco containing material from said extract.

17. The process of Claim 1 wherein said tobacco containing material to which said extract is introduced is said tobacco residue.

## Patentansprüche

1. Verfahren zum selektiven Entfernen von Stickstoff enthaltenden Verbindungen aus Tabak, wobei das Verfahren die folgenden Stufen umfaßt:
Mischen eines Tabak enthaltenden Materials mit einem wäßrigen Lösungsmittel unter Bildung eines Extrakts und eines Tabakrückstands,
Trennen des Tabakrückstands von dem Extrakt,
Inkontaktbringen des Extrakts mit einem adsorbierenden Material, wobei das Adsorptionsmittel ein Gemisch aus einem Bentonit- und einem Aktivkohlematerial umfaßt, und
Einbringen des Extrakts in ein Tabak enthaltendes Material.

2. Verfahren nach Anspruch 1, wobei das Mischen des Tabak enthaltenden Materials mit einem wäßrigen Lösungsmittel bei 60°C bis 90°C für 15 bis 30 Minuten erfolgt.

3. Verfahren nach Anspruch 1, wobei das Mischen des Tabak enthaltenden Materials mit einem wäßrigen Lösungsmittel mit einem Teil Tabak auf elf bis fünfzehn Teile Wasser erfolgt.

4. Verfahren nach Anspruch 1, wobei das Trennen des Tabakrückstands von dem Extrakt mittels einer Zentrifuge oder durch Filtration bewerkstelligt wird.

5. Verfahren nach Anspruch 1, wobei das Inkontaktbringen eines Extrakts mit einem adsorbierenden Material durch Hindurchleiten des Extrakts durch eine gepackte Säule, die das Adsorptionsmittel aufweist, durchgeführt wird.

6. Verfahren nach Anspruch 1, wobei das Inkontaktbringen eines Extrakts mit einem adsorbierenden Material durch Rezirkulieren des Extrakts mit dem Adsorptionsmittel bewerkstelligt wird.

7. Verfahren nach Anspruch 6, wobei der Extrakt mittels einer Zentrifuge oder durch Filtration von dem adsorbierenden Material getrennt wird.

8. Verfahren nach Anspruch 1, wobei das adsorbierende Material im wesentlichen aus einem Gemisch aus Bentonit und Aktivkohle besteht.

9. Verfahren nach Anspruch 8, wobei das Adsorptionsmittel etwa einenTeil Aktivkohle auf einen Teil Bentonit enthält.

10. Verfahren nach Anspruch 8, wobei das Adsorptionsmittel etwa zwei Teile Aktivkohle auf einen Teil Bentonit enthält.

11. Verfahren nach Anspruch 8, wobei das Adsorptionsmittel etwa drei Teile Aktivkohle auf einen Teil Bentonit enthält.

12. Verfahren nach Anspruch 8, wobei das Adsorptionsmittel etwa vier Teile Aktivkohle auf einen Teil Bentonit enthält.

13. Verfahren nach Anspruch 8, wobei das Adsorptionsmittel etwa zwei Teile Bentonit auf einen Teil Aktivkohle enthält.

14. Verfahren nach Anspruch 1, wobei das adsorbierende Material Zelluloseacetat enthält.

15. Verfahren nach Anspruch 1, wobei das adsorbierende Material β-Cyclodextrin enthält.

16. Verfahren nach Anspruch 1, wobei das Verfahren eine Stufe umfaßt, bei der man den Extrakt unter Bildung eines konzentrierten Extrakts konzentriert, wobei die Stufe des Konzentrierens auf die Stufe des Trennens des Tabak enthaltenden Materials von dem Extrakt folgt.

17. Verfahren nach Anspruch 1, wobei das Tabak enthaltende Material, in welches der Extrakt eingebracht wird, der Tabakrückstand ist.

## Revendications

1. Procédé pour éliminer sélectivement des composés azotés du tabac, comprenant les étapes consistant à :
mélanger une matière contenant du tabac avec un solvant aqueux pour former un extrait et un résidu de tabac ;
séparer ledit résidu de tabac dudit extrait ;
mettre en contact ledit extrait avec une matière adsorbante, ledit adsorbant comprenant un mélange d'une bentonite et de charbon activé ; et
introduire ledit extrait dans une matière contenant du tabac.

2. Procédé selon la revendication 1, dans lequel ladite étape consistant à mélanger ladite matière contenant du tabac avec un solvant aqueux est conduite entre 60°C et 90°C pendant 15 à 30 minutes.

3. Procédé selon la revendication 1, dans lequel ladite étape consistant à mélanger la matière contenant du tabac avec un solvant aqueux est effectuée avec une partie de tabac pour onze à quinze parties d'eau.

4. Procédé selon la revendication 1, dans lequel ladite étape consistant à séparer ledit résidu de tabac dudit extrait est effectuée par centrifugation ou par filtration.

5. Procédé selon la revendication 1, dans lequel ladite étape consistant à mettre en contact un extrait avec une matière adsorbante est effectuée en faisant passer ledit extrait à travers une colonne garnie contenant ledit adsorbant.

6. Procédé selon la revendication 1, dans lequel ladite étape consistant à mettre en contact un extrait avec une matière adsorbante est effectuée en faisant recirculer ledit extrait avec ledit adsorbant.

7. Procédé selon la revendication 6, dans lequel ledit extrait est séparé de ladite matière adsorbante par centrifugation ou filtration.

8. Procédé selon la revendication 1, dans lequel ladite matière adsorbante est constituée essentiellement d'un mélange de bentonite et de charbon activé.

9. Procédé selon la revendication 8, dans lequel ledit adsorbant comprend environ une partie de charbon activé pour une partie de bentonite.

10. Procédé selon la revendication 8, dans lequel ledit adsorbant comprend environ deux parties de charbon activé pour une partie de bentonite.

11. Procédé selon la revendication 8, dans lequel ledit adsorbant comprend environ trois parties de charbon activé pour une partie de bentonite.

12. Procédé selon la revendication 8, dans lequel ledit adsorbant comprend environ quatre parties de charbon activé pour une partie de bentonite.

13. Procédé selon la revendication 8, dans lequel ledit adsorbant comprend environ deux parties de bentonite pour une partie de charbon activé.

14. Procédé selon la revendication 1, dans lequel ladite matière adsorbante contient de l'acétate de cellulose.

15. Procédé selon la revendication 1, dans lequel ladite matière adsorbante contient de la β-cyclodextrine.

16. Procédé selon la revendication 1, dans lequel ledit procédé comprend une étape de concentration dudit extrait pour former un extrait concentré, ladite étape de concentration suivant ladite étape consistant à séparer ladite matière contenant du tabac dudit extrait.

17. Procédé selon la revendication 1, dans lequel ladite matière contenant du tabac dans laquelle ledit extrait est introduit est ledit résidu de tabac.
